(19) Europäisches Patentamt
European Patent Office
Office européen des brevets

(11) **EP 3 029 503 A1**

(12) **EUROPÄISCHE PATENTANMELDUNG**

(43) Veröffentlichungstag:
**08.06.2016 Patentblatt 2016/23**

(51) Int Cl.:
***G02B 7/02*** *(2006.01)*

(21) Anmeldenummer: **14196128.4**

(22) Anmeldetag: **03.12.2014**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **SICK AG**
**79183 Waldkirch (DE)**

(72) Erfinder: **Eble, Johannes**
**79183 Waldkirch (DE)**

(74) Vertreter: **Rieger, Daniel-Stephan**
**Sick AG**
**Intellectual Property**
**Erwin-Sick-Straße 1**
**79183 Waldkirch (DE)**

(54) **Optikmodul und optoelektronischer Sensor**

(57) Optikmodul mit mindestens einer Linse (2), einer Leiterplatte (4) und mindestens einem Sendeelement (6) und/oder mindestens einem Empfangselement (8), welches auf der Leiterplatte (4) angeordnet ist, wobei die Linse (2) und die Leiterplatte (4) mittels eines Abstandshalters (10) beabstandet voneinander angeordnet sind, wobei die Linse (2) an mindestens einer Stelle an dem Abstandshalter (10) angeordnet ist und der Abstandshalter (10) mit der Leiterplatte (4) verbunden ist, wobei die Linse (2) eine Sammellinse (12) ist, um ein Strahlenbündel (14) auf das Empfangselement (8) zu fokussieren und/oder ein Strahlenbündel (14) von dem Sendeelement (6) zu erzeugen, wobei die eine Hauptebene der Sammellinse (12) in einem spitzen Winkel α (52) zu einer Ebene parallel zur Leiterplattenoberfläche (16) angeordnet ist und die Sammellinse eine plane Grenzfläche (20) aufweist, die in einem spitzen Winkel β zur Hauptebene (66) der Sammellinse (12) verläuft, wobei die spitzen Winkel α (52) und β (54) einen gemeinsamen Winkelursprung (68) aufweisen.

Fig.4

EP 3 029 503 A1

**Beschreibung**

Die vorliegende Erfindung betrifft ein Optikmodul nach dem Oberbegriff von Anspruch 1, sowie einen optischen Sensor mit einem Optikmodul nach Anspruch 12.

Werden beispielsweise Optikmodule aus Kunststoff verwendet, um aus verschiedenen Lichtquellen parallele Strahlenbündel zu erzeugen, so hat die Umgebungstemperatur Einfluss auf das Strahlenbündel.

Bei zunehmenden Umgebungstemperaturen dehnt sich der Kunststoff einer Linse bzw. eines Linsenarray weitaus stärker aus als das Leiterplattenmaterial. Der Ausdehnungsunterschied kann dabei bis zu einem Faktor vier betragen.

Dadurch verschieben sich die Positionen der Linsen relativ zu den entsprechenden Lichtquellen bzw. Empfangselementen. Dadurch wird die Richtung des Strahlenbündels verändert.

Eine Aufgabe der Erfindung besteht darin, ein Optikmodul sowie einen optoelektronischen Sensor bereitzustellen, welches bzw. welcher bei Temperaturschwankungen gleichbleibende optische Eigenschaften aufweist. Insbesondere soll ein erzeugter Lichtspot und/oder eine Empfangsrichtung unabhängig von der Umgebungstemperatur sein.

Die Aufgabe wird gemäß Anspruch 1 gelöst durch ein Optikmodul mit mindestens einer Linse, einer Leiterplatte und mindestens einem Sendeelement und/oder mindestens einem Empfangselement, welches auf der Leiterplatte angeordnet ist, wobei die Linse und die Leiterplatte mittels eines Abstandshalters beabstandet voneinander angeordnet sind, wobei die Linse an mindestens einer Stelle an dem Abstandshalter angeordnet ist und der Abstandshalter mit der Leiterplatte verbunden ist, wobei die Linse eine Sammellinse ist, um ein Strahlenbündel auf das Empfangselement zu fokussieren und/oder ein Strahlenbündel von dem Sendeelement zu erzeugen, wobei eine Hauptebene der Sammellinse in einem spitzen Winkel $\alpha$ zu einer Ebene parallel zur Leiterplattenoberfläche angeordnet ist und die Sammellinse eine plane Grenzfläche aufweist, die in einem spitzen Winkel $\beta$ zur Hauptebene der Sammellinse verläuft, wobei die spitzen Winkel $\alpha$ und $\beta$ einen gemeinsamen Winkelursprung aufweisen.

Weiter wird die Aufgabe gemäß Anspruch 10 gelöst mit einem optischen Sensor mit einem Optikmodul.

Vor der Sammellinse ist somit quasi ein Ablenkprisma angeordnet mit zwei Grenzflächen, die in einem spitzen Winkel $\beta$ angeordnet sind, wobei die spitzen Winkel $\alpha$ und $\beta$ eine gemeinsame Winkelrichtung bzw. einen gemeinsamen Winkelursprung aufweisen, wobei die Sammellinse und das Ablenkprisma einstückig sind.

Bei dem Strahlbündel kann es sich optional um ein nahezu paralleles Strahlbündel handeln.

Je größer die Temperaturdifferenz, desto größer ist erstens ein relativer lateraler Versatz zwischen Sendeelement bzw. Empfangselement und den Sammellinsen. Dadurch entsteht ein temperaturabhängiger Schielwinkel $\alpha$. Dieser wird gemäß der vorliegenden Erfindung kompensiert.

Das Licht des Sendeelements wird durch eine z. B. konvexe Fläche der Linse gebündelt und dadurch beispielsweise parallelisiert. Danach trifft das Licht auf eine um den Winkel $\beta$ gekippte Grenzfläche des Prismas. Da zweitens der Brechungsindex des Linsenmaterials, beispielsweise Kunststoff temperaturabhängig ist, wird das Licht an der prismatischen Fläche je nach Temperatur unterschiedlich stark gebrochen. Der Winkel $\beta$ ist derart gewählt, dass der temperaturabhängige Schielwinkel von der prismatischen Brechung aufgehoben wird.

Da beide Temperatureffekte linear sind, können diese über einen weiten Temperaturbereich gemäß der Erfindung ausgeglichen werden. Damit ist die Abstrahlrichtung des Strahlbündels unabhängig von der Temperatur.

Um die ursprüngliche Abstrahlrichtung zu erhalten, wird die Linse um den Winkel $\alpha$ rotiert angeordnet und die Position des Sendeelements bzw. des Empfangselements auf der Leiterplatte zur Sammellinse angepasst.

Das Ablenkprisma ist ein Körper aus durchsichtigem Material, zu dessen Grenzflächen zwei sich schneidende Ebenen gehören. Die Schnittkante dieser beiden Ebenen heißt brechende Kante. Jede Ebene, die senkrecht zu ihr steht, ist ein Hauptschnitt des Prismas. Der im Hauptschnitt liegende Winkel an der brechenden Kante ist der Prismenwinkel, auch brechender Winkel genannt. Ein das Ablenkprisma in einem Hauptschnitt durchsetzender Lichtstrahl wird aus seiner ursprünglichen Richtung um den Ablenkungswinkel des Prismas abgelenkt.

Die Sammellinse und das Ablenkprisma sind einstückig ausgebildet. Dadurch ist zwischen der Sammellinse und dem Ablenkprisma keine störende Übergangsfläche mehr vorhanden, an der es zu unerwünschten Reflexionen kommen kann. Weiter ist ein einstückiges Sammellinsen-Ablenkprisma-Teil ebenso einfach herstellbar und dabei kostengünstiger als zwei getrennte Teile, da eben nur ein einziges Werkzeug notwendig ist.

In Weiterbildung der Erfindung ist der Winkel $\beta$ gemäß der Formel

$$\beta = \arctan\left\{\cos\alpha\left[\frac{dn}{dT}\left(\frac{d\alpha}{dT}\right)^{-1} + \sin\alpha\right]^{-1}\right\}$$

eine Funktion des Winkels $\alpha$. Durch die von dem Erfinder erkannte Gesetzmäßigkeit kann der spitze Winkel $\beta$ genau auf den spitzen Winkel $\alpha$ abgestimmt werden, wodurch eine hochgenaue Kompensation erreicht wird.

In einer bevorzugten Ausführungsform sind die Sammellinse und das Ablenkprisma aus Kunststoff. Dadurch kann die Sammellinse und das Ablenkprisma sehr preiswert als Kunststoffspritzling hergestellt werden.

Beispielsweise ist der Kunststoff Polymethylmethacrylat, abgekürzt PMMA. Der Ausdehnungskoeffizient für PMMA liegt beispielsweise bei dn/dT = $-1,05*10^{-4}/°C$. PMMA ist ein synthetischer, transparenter thermoplastischer Kunststoff.

In Weiterbildung der Erfindung weist die Sammellinse eine konvexe Fläche und eine gegenüberliegende plane Fläche auf. Die konvexe Fläche ist beispielsweise eine sphärische oder eine asphärische Fläche. Eine derartige Linse ist sehr einfach herzustellen und weist die notwendige Sammeleigenschaft auf.

In Weiterbildung der Erfindung sind zwei Sammellinsen an einem Abstandshalter gegenüberliegend angeordnet. Gemäß dieser Ausführung ist nur ein Abstandshalter für zwei Sammellinsen notwendig, wodurch diese Weiterbildung kostengünstiger ist. Diese Anordnung hat den Vorteil, dass diese symmetrisch aufgebaut ist, wobei die Symmetrieachse oder Symmetrieebene durch den Abstandshalter verläuft.

In Weiterbildung der Erfindung sind drei Sammellinsen an zwei Abstandshaltern angeordnet, wobei eine erste Sammellinse an dem ersten Abstandshalter angeordnet ist, eine zweite Sammellinse an dem zweiten Abstandshalter und eine dritte Sammellinse zwischen dem ersten Abstandshalter und dem zweiten Abstandshalter angeordnet ist, wobei die erste Sammellinse und die zweite Sammellinse jeweils eine plane Grenzfläche aufweist, die in einem spitzen Winkel $\beta$ zur Hauptebene der Sammellinse verläuft, wobei die spitzen Winkel $\alpha$ und $\beta$ einen gemeinsamen Winkelursprung aufweisen.

Gemäß dieser Weiterbildung ist ein temperaturinsensitiver Aufbau einer Linsenreihe mit drei Linsen gebildet. Die Linsenreihe ist symmetrisch um eine Symmetrieebene bzw. eine Symmetrieachse aufgebaut. Die Abstandshalter, welche die Linsenreihe mit der Elektronikkarte verbinden, sind ebenfalls symmetrisch angeordnet. Dadurch dehnt sich bei einer Temperaturänderung sowohl die Linsenreihe als auch die Elektronikkarte symmetrisch zur Symmetrieebene aus. Das Zentrum der mittleren Linse, bzw. der dritten Linse bleibt damit bei Temperaturänderungen ortsfest über dem mittleren Sendeelement bzw. dem mittleren Empfangselement. Diese dritte Sammellinse besitzt daher keine gewinkelte Planfläche bzw. kein Ablenkprisma. Die erste und zweite Linse, also die äußeren Linsen entfernen sich bei einer Temperaturerhöhung von der Symmetrieebene bzw. Symmetrieachse, entsprechend nähern sich diese an bei einer Temperaturverringerung. Die erste und zweite Linse besitzen eine gewinkelte Planfläche bzw. weisen ein Ablenkprisma auf. Der Winkel $\beta$ der Planfläche bzw. des Prismas ist abhängig von der Wellenlänge des verwendeten Lichts und den Abständen von Linse und Sendeelement bzw. Empfangselement zur Symmetrieachse bzw. Symmetrieebene.

Die Linsenreihe ist dabei derart ausgebildet, dass es sich bei einer Temperaturänderung nur lateral relativ zur Leiterplatte ausdehnt. Die Ausdehnungsdifferenz zwischen Linsenarray und Leiterplatte wird von den Abstandshaltern aufgefangen. Diese sind elastisch ausgebildet und verbiegen sich bei einer Temperaturänderung.

In Weiterbildung der Erfindung sind n Sammellinsen nebeneinander in einer Linsenreihe angeordnet, so dass die optischen Achsen der Sammellinsen parallel beabstandet zueinander sind, wobei n eine natürliche Zahl ist. So sind gemäß dieser Ausführungsform Optikmodule mit einer Vielzahl von Sammellinsen, beispielsweise 10, 20, 30, 40 oder mehr Sammellinsen in einer Reihe vorgesehen. Die spitzen Winkel $\alpha$ und $\beta$ der jeweiligen Prismen der jeweiligen Sammellinsen sind dabei jeweils individuell ausgebildet und ggf. unterschiedlich.

In Weiterbildung der Erfindung sind n mal m Sammellinsen in einer Fläche in einem Linsenarray angeordnet, so dass die optischen Achsen der Sammellinsen parallel beabstandet zueinander sind, wobei n und m natürliche Zahlen sind. So sind gemäß dieser Ausführungsform Optikmodule mit einer Vielzahl von Sammellinsen, beispielsweise 10 mal 10, 20 mal 20, 30 mal 30, 40 mal 40 oder mehr Sammellinsen in einem Linsenarray vorgesehen. Die spitzen Winkel $\alpha$ und $\beta$ der jeweiligen Prismen der jeweiligen Sammellinsen sind dabei jeweils individuell ausgebildet und ggf. unterschiedlich.

In Weiterbildung der Erfindung sind die Sammellinse und das Ablenkprisma jeweils als getrennte Körper ausgebildet. Dadurch können jeweils verschieden ausgebildete Ablenkprismen mit jeweils identischen Sammellinsen kombiniert werden.

In einer weiteren bevorzugten Ausführungsform sind die Sammellinse und der Abstandshalter einstückig ausgebildet, wodurch ein Kostenvorteil erzielt wird und Werkzeugkosten weiter minimiert werden.

In Weiterbildung der Erfindung ist zwischen der Sammellinse und der Leiterplattenoberfläche ein Kunststofftubus angeordnet. Der Kunststofftubus ist bevorzugt aus schwarzem Kunststoff ausgebildet und verhindert störende Reflexionen zwischen Sammellinse und Sendeelement bzw. Empfangselement. Der Tubus weist eine matte Oberfläche auf, wodurch das Störlicht besser absorbiert wird.

In Weiterbildung der Erfindung ist der optische Sensor eine Lichtschranke oder ein Lichttaster. Bei der Lichtschranke kann es sich um eine Einweglichtschranke mit einem Sender und einem gegenüberliegenden Empfänger handeln. Jedoch kann es sich bei der Lichtschranke auch um eine Reflexionslichtschranke handeln, wobei Sender und Empfänger in einem gemeinsamen Gehäuse untergebracht sind und gegenüberliegend ein Retroreflektor angeordnet ist. Durch das erfindungsgemäße Optikmodul kann die Lichtschranke weniger störanfällig bei Temperaturschwankungen ausgebildet werden.

Bei dem Lichttaster kann es sich beispielsweise um einen Lichttaster basierend auf Lichtlaufzeit oder Triangulation handeln.

In einer bevorzugten Ausführungsform der Erfindung ist der optische Sensor ein Lichtgitter. Bei dem Lichtgitter kann es sich um ein Einweglichtgitter mit einem Sender mit einer Vielzahl von Sendeelementen auf einer Seite und einem gegenüberliegenden Empfänger mit einer Vielzahl von Empfangselementen handeln. Jedoch kann es sich bei der Lichtschranke auch um ein Reflexionslichtgitter handeln, wobei Sendeelemente und Empfangselemente in einem gemeinsamen Gehäuse untergebracht sind und gegenüberliegend ein Retroreflektor angeordnet ist. Durch das erfindungsgemäße Optikmodul kann das Lichtgitter weniger störanfällig bei Temperaturschwankungen ausgebildet werden. Auch das Lichtgitter kann nach dem Prinzip eines Lichttasters arbeiten, also z. B. nach dem Prinzip der Lichtlaufzeit oder der Triangulation.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:

Figur 1      ein Optikmodul mit einer Linse, einer Leiterplatte und mindestens einem Sendeelement und/oder mindestens einem Empfangselement;

Figur 2      eine Anordnung aus Figur 1, wobei eine höhere Umgebungstemperatur vorliegt;

Figur 3      eine Anordnung aus Figur 1, wobei eine niedrigere Umgebungstemperatur vorliegt;

Figur 4      ein Optikmodul gemäß der Erfindung mit einer Linse, einer Leiterplatte und mindestens einem Sendeelement und/oder mindestens einem Empfangselement;

Figur 5      zwei Sammellinsen an einem Abstandshalter gegenüberliegend angeordnet;

Figur 6      eine Anordnung aus Figur 5, wobei eine höhere Umgebungstemperatur vorliegt;

Figur 7      eine Anordnung aus Figur 5, wobei eine niedrigere Umgebungstemperatur vorliegt;

Figur 8      ein Optikmodul gemäß der Erfindung mit zwei Linsen, einer Leiterplatte und jeweils einem Sendeelement und/oder mindestens einem Empfangselement pro Linse;

Figur 9      drei Sammellinsen an zwei Abstandshaltern angeordnet;

Figur 10     eine Anordnung aus Figur 9, wobei eine höhere Umgebungstemperatur vorliegt;

Figur 11     eine Anordnung aus Figur 9, wobei eine niedrigere Umgebungstemperatur vorliegt;

Figur 12     eine Anordnung aus Figur 10 in einer Mehrfachanordnung, wobei eine höhere Umgebungstemperatur vorliegt;

Figur 13     ein Optikmodul gemäß der Erfindung mit drei Sammellinsen an zwei Abstandshaltern angeordnet, wobei eine erste Sammellinse an dem ersten Abstandshalter angeordnet ist;

Figur 14     ein Ablenkprisma

In den nachfolgenden Figuren sind identische Teile mit identischen Bezugszeichen versehen.

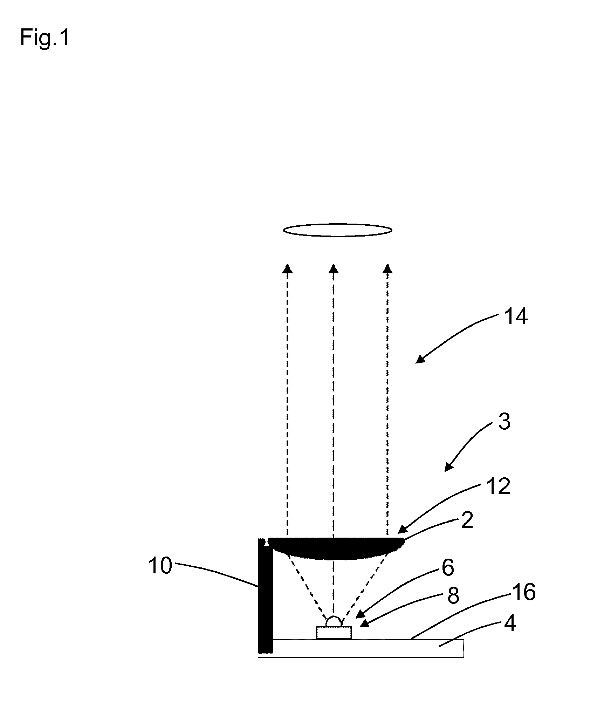

Figur 1 zeigt ein Optikmodul 3 mit einer Linse 2, einer Leiterplatte 4 und mindestens einem Sendeelement 6 und/oder mindestens einem Empfangselement 8, welches auf der Leiterplatte 4 angeordnet ist, wobei die Linse 2 und die Leiterplatte 4 mittels eines Abstandshalters 10 beabstandet voneinander angeordnet sind, wobei die Linse 2 an mindestens einer Stelle an dem Abstandshalter 10 angeordnet ist und der Abstandshalter 10 mit der Leiterplatte 4 verbunden ist, wobei die Linse 2 eine Sammellinse 12 ist, um ein beispielsweise paralleles Strahlenbündel 14 auf das Empfangselement 8 zu fokussieren und/oder ein beispielsweise paralleles Strahlenbündel 14 von dem Sendeelement 6 zu erzeugen, wobei die Sammellinse 12 parallel zur Leiterplattenoberfläche 16 angeordnet ist. Die Lichtstrahlen werden in einem rechten Winkel zur Leiterplattenoberfläche 16 ausgesendet.

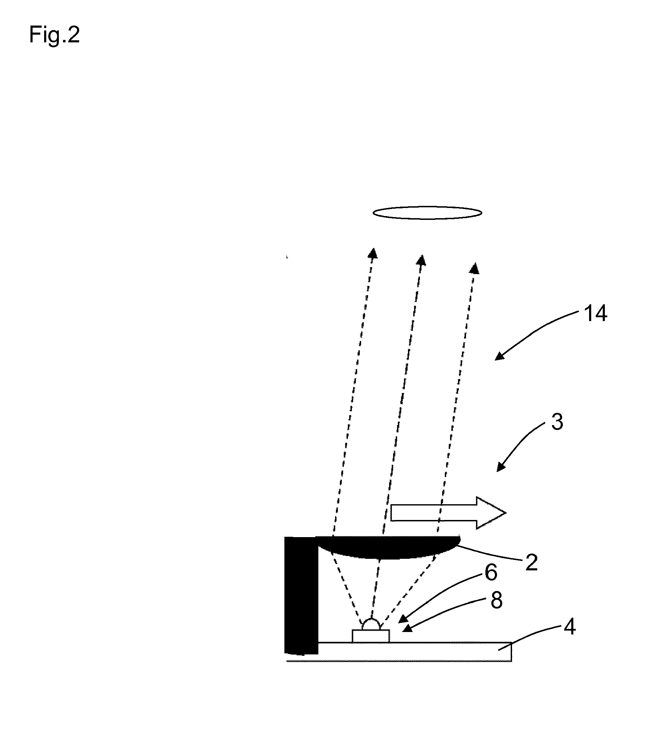

Figur 2 zeigt die Anordnung aus Figur 1, wobei eine höhere Umgebungstemperatur vorliegt. Dadurch dehnt sich die Linse 2 stärker aus als die Leiterplatte 4. Dadurch verschiebt sich die Linse 2 gegenüber dem Sendeelement 6 bzw. gegenüber dem Empfangselement 8, wodurch das parallele Strahlbündel 14 in seiner Richtung geändert wird, nämlich in einem Winkel nach rechts geneigt ist.

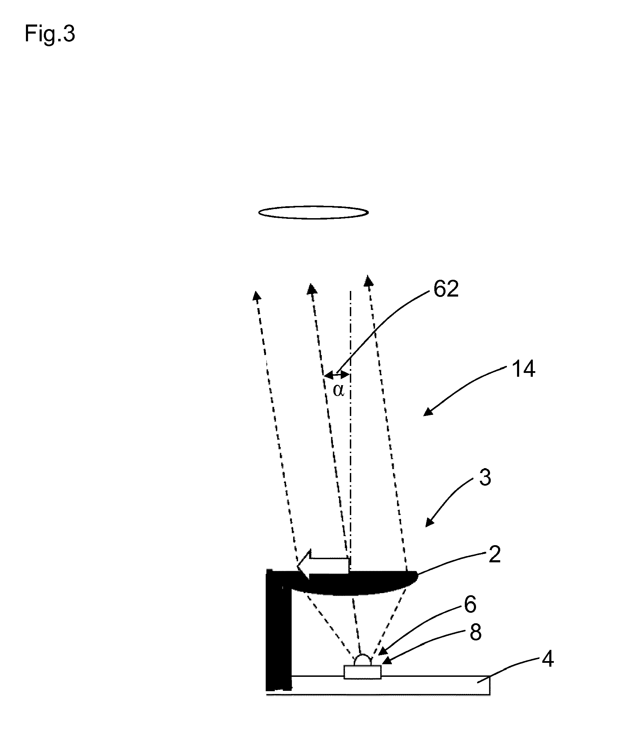

Figur 3 zeigt die Anordnung aus Figur 1, wobei eine niedrigere Umgebungstemperatur vorliegt. Dadurch zieht sich die Linse 2 stärker zusammen als die Leiterplatte 4. Dadurch verschiebt sich die Linse 2 gegenüber dem Sendeelement 6 bzw. gegenüber dem Empfangselement 8, wodurch das parallele Strahlbündel 14 in seiner Richtung geändert wird, nämlich in einem Winkel nach links geneigt ist.

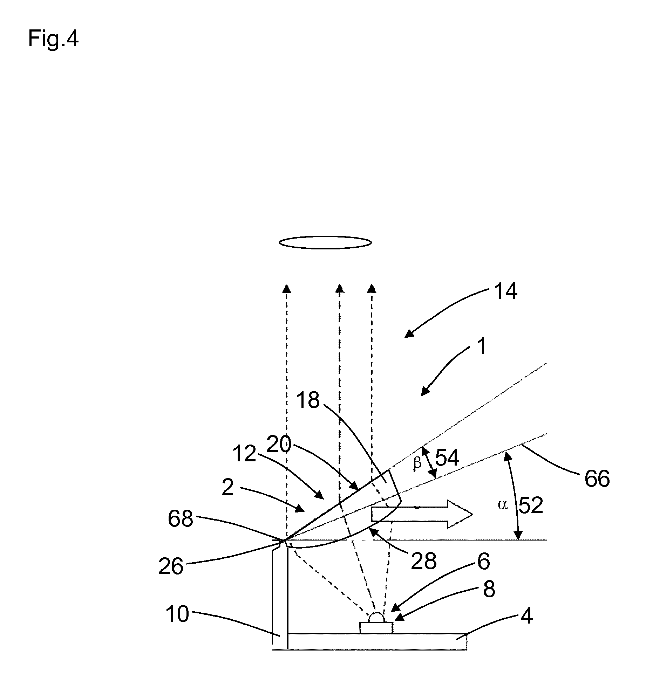

Figur 4 zeigt ein Optikmodul 1 mit einer Linse 2, einer Leiterplatte 4 und mindestens einem Sendeelement 6 und/oder mindestens einem Empfangselement 8, welches auf der Leiterplatte 4 angeordnet ist, wobei die Linse 2 und die Leiterplatte 4 mittels eines Abstandshalters 10 beabstandet voneinander angeordnet sind, wobei die Linse 2 an mindestens einer Stelle an dem Abstandshalter 10 angeordnet ist und der Abstandshalter 10 mit der Leiterplatte 4 verbunden ist, wobei die Linse 2 eine Sammellinse 12 ist, um ein paralleles Strahlenbündel 14 auf das Empfangselement 8 zu fokussieren und/oder ein paralleles Strahlenbündel 14 von dem Sendeelement 6 zu erzeugen, wobei eine Hauptebene 66 der Sammellinse 12 in einem spitzen Winkel $\alpha$ 52 zu einer Ebene parallel zur Leiterplattenoberfläche 16 angeordnet ist und die Sammellinse eine plane Grenzfläche 20 aufweist, die in einem spitzen Winkel $\beta$ 54 zur Hauptebene 66 der Sammellinse 12 verläuft, wobei die spitzen Winkel $\alpha$ 52 und $\beta$ 54 einen gemeinsamen Winkelursprung 68 aufweisen.

Gemäß Figur 4 ist die Schnittkante 26 des Ablenkprismas 18 an dem Ende angeordnet, an dem die Sammellinse 12 an dem Abstandshalter 10 angeordnet ist. Jedoch kann der Abstandshalter 10 auch an dem gegenüberliegenden Ende des Ablenkprismas 18 bzw. dem gegenüberliegenden Ende der Sammellinse 12 angeordnet sein.

Je größer die Temperaturdifferenz, desto größer ist erstens ein relativer lateraler Versatz zwischen Sendeelement 6 bzw. Empfangselement 8 und der Sammellinse 12. Dadurch entsteht ein temperaturabhängiger Schielwinkel $\alpha$ 62 gemäß Figur 1 bis 3. Dieser wird gemäß Figur 4 kompensiert. Das Strahlenbündel 14 wird auch bei einer Temperaturänderung senkrecht zur Leiterplatte 4 ausgesendet, da sich die Ausdehnung der Sammellinse 12 und die Ablenkung durch das Ablenkprisma 18 gegenseitig aufheben.

Das Licht des Sendeelements 6 wird durch eine z. B. konvexe Fläche 28 der Sammmellinse 12 gebündelt und dadurch beispielsweise parallelisiert. Danach trifft das Licht auf eine um den Winkel $\beta$ gekippte Grenzfläche 20 des Prismas. Da zweitens der Brechungsindex des Linsenmaterials, beispielsweise Kunststoff temperaturabhängig ist, wird das Licht an der prismatischen Fläche bzw. Grenzfläche 20 je nach Temperatur unterschiedlich stark gebrochen. Der Winkel $\beta$ 54 ist derart gewählt, dass der temperaturabhängige Schielwinkel von der prismatischen Brechung aufgehoben wird.

Da beide Temperatureffekte linear sind, können diese über einen weiten Temperaturbereich gemäß der Erfindung ausgeglichen werden. Damit ist die Abstrahlrichtung des Strahlbündels 14 unabhängig von der Temperatur.

Um die ursprüngliche Abstrahlrichtung zu erhalten, wird die Sammellinse 12 um den Winkel $\alpha$ 52 rotiert angeordnet und die Position des Sendeelements 6 bzw. des Empfangselements 8 auf der Leiterplatte zur Sammellinse 12 angepasst, also auf der Leiterplatte 4 verschoben, derart, dass das Sendeelement bzw. Empfangselement beispielsweise wieder im Brennpunkt der Sammellinse angeordnet ist.

Der Winkel $\beta$ 54 ist gemäß der Formel

$$\beta = \arctan\left\{ \cos\alpha \left[ \frac{dn}{dT}\left(\frac{d\alpha}{dT}\right)^{-1} + \sin\alpha \right]^{-1} \right\}$$

eine Funktion des Winkels $\alpha$ 52. Durch die von dem Erfinder erkannte Gesetzmäßigkeit kann der spitze Winkel $\beta$ 54 genau auf den spitzen Winkel $\alpha$ 52 abgestimmt werden, wodurch eine hochgenaue Kompensation erreicht wird.

Gemäß Figur 4 sind die Sammellinse 12 und das Ablenkprisma 18 aus Kunststoff. Beispielsweise ist der Kunststoff Polymethylmethacrylat, abgekürzt PMMA.

Gemäß Figur 4 weist die Sammellinse 12 eine konvexe Fläche 28 und eine gegenüberliegende plane Fläche bzw. Grenzfläche 20 auf. Die konvexe Fläche 28 ist beispielsweise eine sphärische oder eine asphärische Fläche.

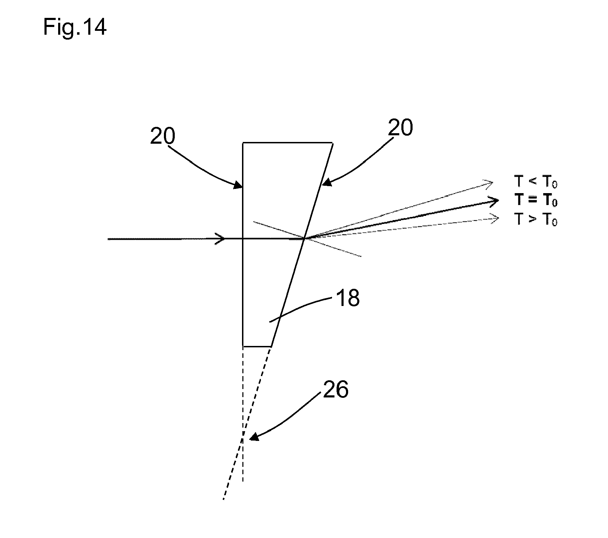

Figur 14 zeigt ein Ablenkprisma 18. Das Ablenkprisma 18 ist ein Körper aus durchsichtigem Material, zu dessen Grenzflächen 20 zwei sich schneidende Ebenen gehören. Die Schnittkante 26 dieser beiden Ebenen heißt brechende Kante. Jede Ebene, die senkrecht zu ihr steht, ist ein Hauptschnitt des Prismas. Der im Hauptschnitt liegende Winkel an der brechenden Kante ist der Prismenwinkel, auch brechender Winkel genannt. Ein das Ablenkprisma 18 in einem Hauptschnitt durchsetzender Lichtstrahl wird aus seiner ursprünglichen Richtung um den Ablenkungswinkel des Prismas abgelenkt. Die Ablenkung ist dabei abhängig von dem temperaturabhängigen Brechungsindex.

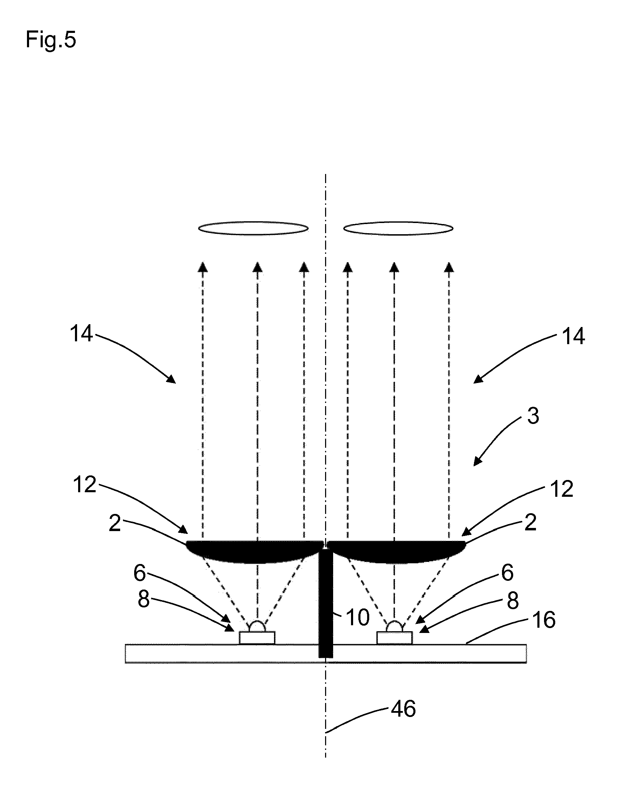

Gemäß Figur 5 sind zwei Sammellinsen 12 an einem Abstandshalter 10 gegenüberliegend angeordnet. Gemäß dieser Ausführung ist nur ein Abstandshalter 10 für zwei Sammellinsen 12 notwendig, wodurch diese Weiterbildung kostengünstiger ist. Diese Anordnung hat den Vorteil, dass diese symmetrisch aufgebaut ist, wobei die Symmetrieachse 46 oder Symmetrieebene senkrecht zur Leiterplattenoberfläche 16 durch den Abstandshalter 10 verläuft. Gemäß Figur 5 sind die zwei Strahlenbündel 14 bei einer Temperatur T0 parallel zueinander.

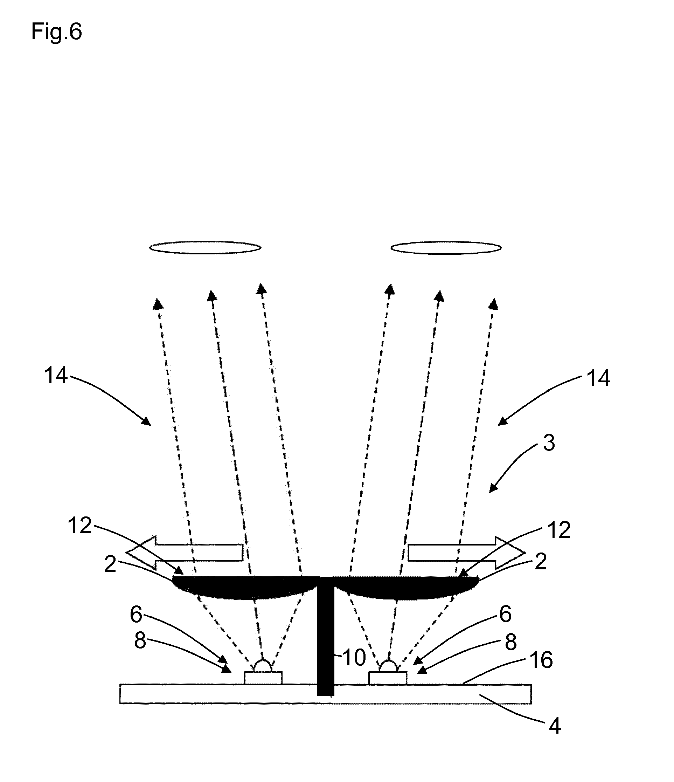

Figur 6 zeigt die Anordnung aus Figur 5, wobei eine höhere Umgebungstemperatur vorliegt. Dadurch dehnt sich jede Sammellinse 12 stärker aus als die Leiterplatte 4. Dadurch verschieben sich die Sammellinsen 12 gegenüber dem Sendeelement 6 bzw. gegenüber dem Empfangselement 8, wodurch die bisher parallelen Strahlbündel 14 in ihrer Richtung geändert werden, und jeweils in einem Winkel nach rechts oder links geneigt werden, wodurch die Strahlbündel 14 nachteilig voneinander weg gerichtet sind.

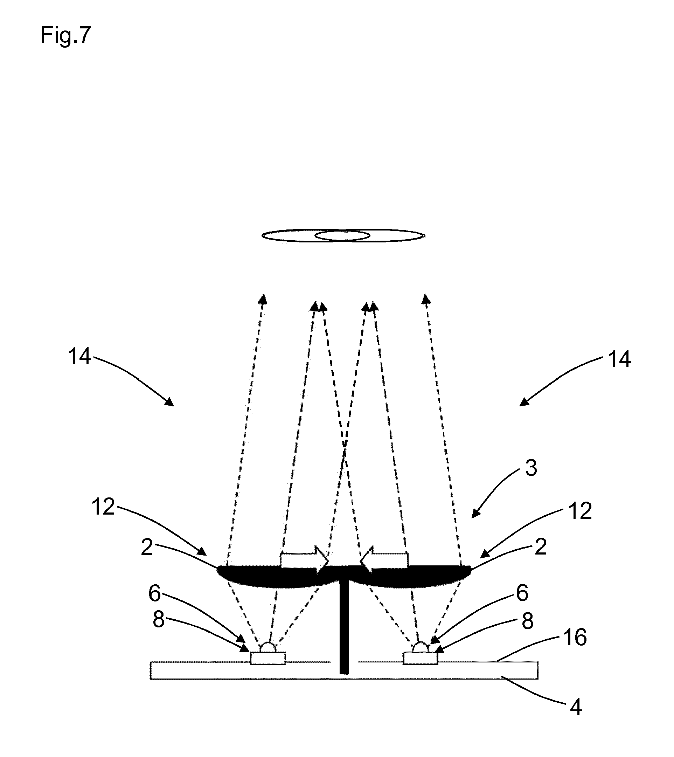

Figur 7 zeigt die Anordnung aus Figur 5, wobei eine niedrigere Umgebungstemperatur vorliegt. Dadurch zieht sich jede Sammellinse 12 stärker zusammen als die Leiterplatte 4. Dadurch verschieben sich die Sammellinsen 12 gegenüber dem Sendeelement 6 bzw. gegenüber dem Empfangselement 8, wodurch die bisher parallelen Strahlbündel in ihrer Richtung geändert werden, und jeweils in einem Winkel nach rechts oder links geneigt werden, wodurch die Strahlbündel nachteilig aufeinander zu gerichtet sind.

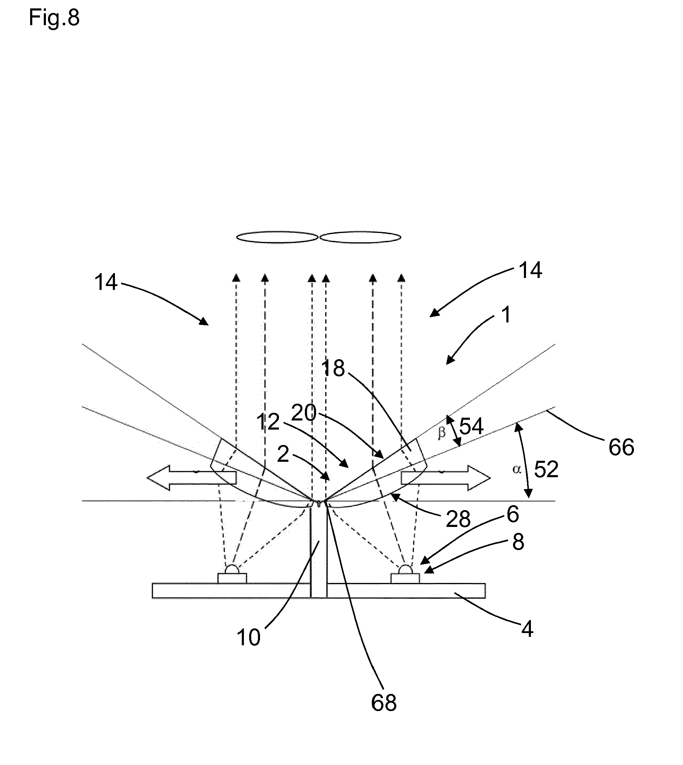

Figur 8 zeigt ein Optikmodul 1 mit zwei Linsen 2, einer Leiterplatte 4 und jeweils einem Sendeelement 6 und/oder mindestens einem Empfangselement 8 pro Linse, welches auf der Leiterplatte 4 angeordnet ist, wobei die Linsen 2 und die Leiterplatte 4 mittels eines Abstandshalters 10 beabstandet voneinander angeordnet sind, wobei die Linsen 2 an mindestens einer Stelle an dem Abstandshalter 10 angeordnet sind und der Abstandshalter 10 mit der Leiterplatte 4 verbunden ist, wobei die Linsen 2 Sammellinsen 12 sind, um ein paralleles Strahlenbündel 14 auf das Empfangselement 8 zu fokussieren und/oder ein paralleles Strahlenbündel 14 von dem Sendeelement 6 zu erzeugen, wobei die Sammellinsen 12 in einem spitzen Winkel $\alpha$ 52 zur Leiterplattenoberfläche 16 angeordnet sind und vor der Sammellinse 12 jeweils ein Ablenkprisma 18 angeordnet ist mit zwei Grenzflächen 20, die in einem spitzen Winkel $\beta$ 54 angeordnet sind, wobei die spitzen Winkel $\alpha$ 52 und $\beta$ 54 eine gemeinsame Winkelrichtung aufweisen.

Analog zu Figur 4 wird gemäß Figur 8 das Licht des Sendeelements 6 durch eine z. B. konvexe Fläche 28 der Linse 2 gebündelt und dadurch beispielsweise parallelisiert. Danach trifft das Licht auf eine um den Winkel $\beta$ 54 gekippte Grenzfläche 20 des Ablenkprismas 18. Da zweitens der Brechungsindex des Linsenmaterials, beispielsweise Kunststoff temperaturabhängig ist, wird das Licht an der prismatischen Fläche je nach Temperatur unterschiedlich stark gebrochen. Der Winkel $\beta$ 54 ist derart gewählt, dass der temperaturabhängige Schielwinkel von der prismatischen Brechung aufgehoben wird.

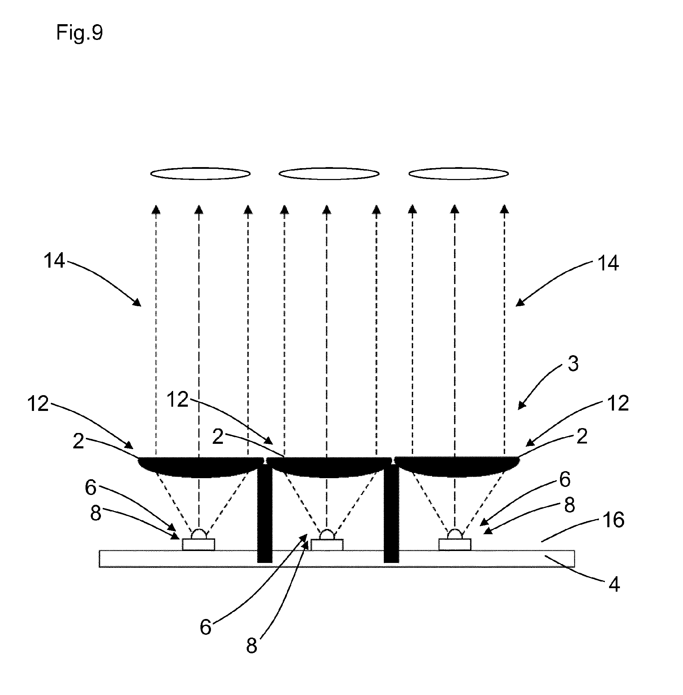

Gemäß Figur 9 sind drei Sammellinsen 12 an zwei Abstandshaltern 10 angeordnet, wobei eine erste Sammellinse 12 an dem ersten Abstandshalter 10 angeordnet ist, eine zweite Sammellinse 12 an dem zweiten Abstandshalter 10 und eine dritte Sammellinse 12 zwischen dem ersten Abstandshalter 10 und dem zweiten Abstandshalter 10 angeordnet ist. Gemäß Figur 9 sind die drei Strahlenbündel bei einer Temperatur T0 parallel zueinander.

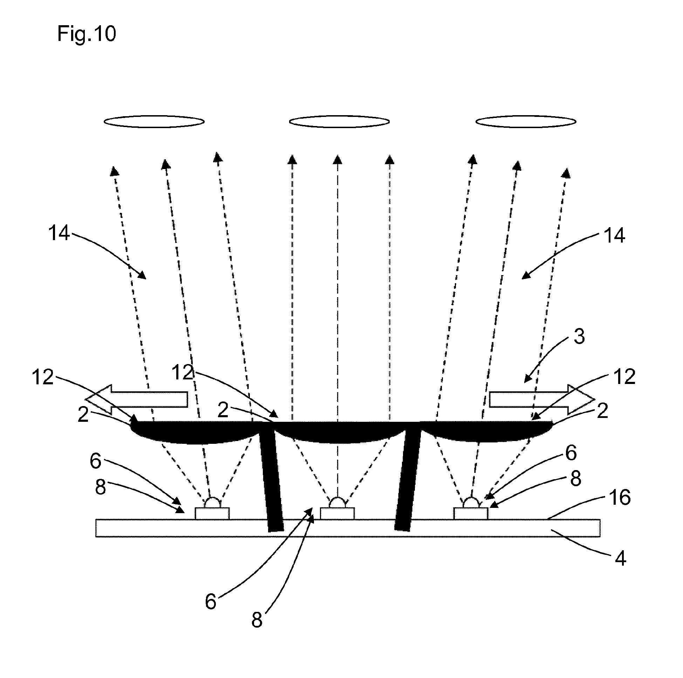

Figur 10 zeigt die Anordnung aus Figur 9, wobei eine höhere Umgebungstemperatur vorliegt. Dadurch dehnt sich jede Linse 2 stärker aus als die Leiterplatte 4. Dadurch verschieben sich die äußeren Linsen 2 gegenüber dem Sendeelement 6 bzw. gegenüber dem Empfangselement 8, wodurch die bisher parallelen Strahlbündel in ihrer Richtung geändert werden, und jeweils in einem Winkel nach rechts oder links geneigt werden, wodurch die äußeren Strahlbündel 14 nachteilig voneinander weg gerichtet sind. Lediglich das Strahlbündel 14 der mittleren Linse 2 verläuft weiter senkrecht zur Leiterplattenoberfläche 16, da die Linse 2 weiter symmetrisch über dem Sendeelement 6 bzw. Empfangselement 8 angeordnet ist.

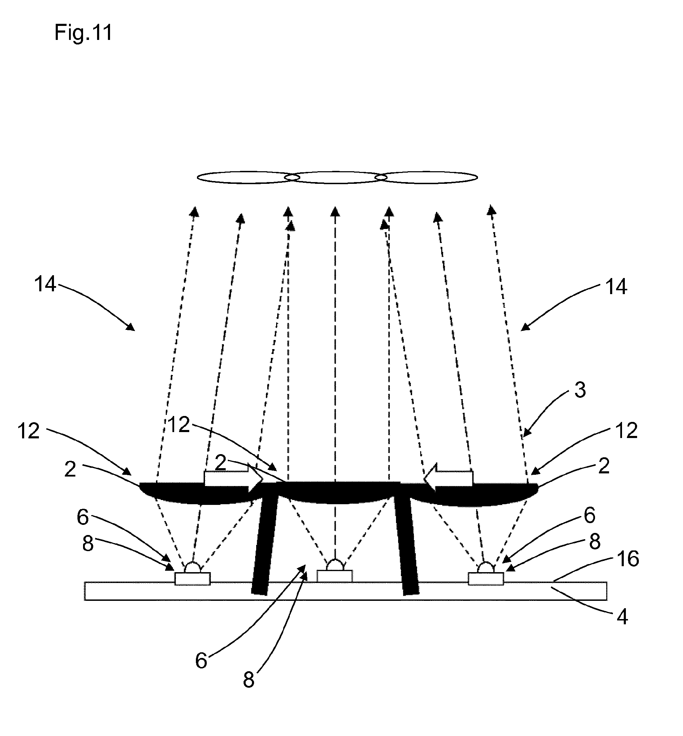

Figur 11 zeigt die Anordnung aus Figur 9, wobei eine niedrigere Umgebungstemperatur vorliegt. Dadurch zieht sich jede Linse 2 stärker zusammen als die Leiterplatte 4. Dadurch verschieben sich die äußeren Linsen 2 gegenüber dem Sendeelement 6 bzw. gegenüber dem Empfangselement 8, wodurch die bisher parallelen Strahlbündel in ihrer Richtung geändert werden, und jeweils in einem Winkel nach rechts oder links geneigt werden, wodurch die äußeren Strahlbündel 14 nachteilig aufeinander zu gerichtet sind. Lediglich das Strahlbündel 14 der mittleren Linse 2 verläuft weiter senkrecht zur Leiterplattenoberfläche 16, da die Linse 2 weiter symmetrisch über dem Sendeelement 6 bzw. Empfangselement 8 angeordnet ist.

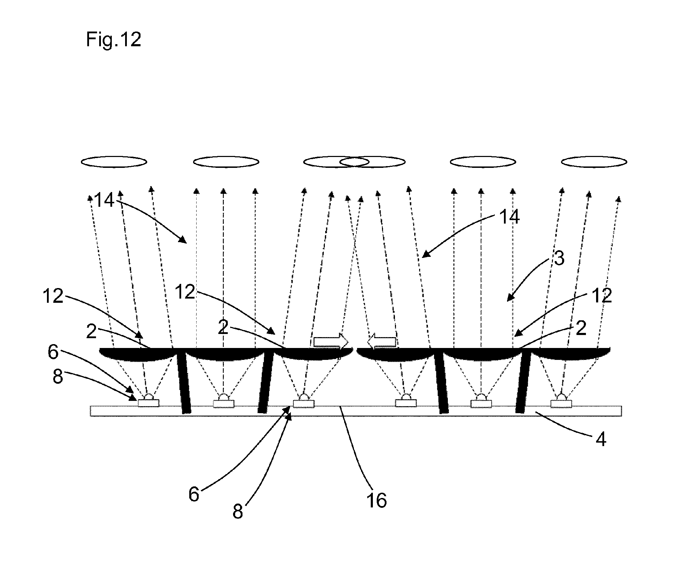

Figur 12 zeigt die Anordnung aus Figur 10 in einer Mehrfachanordnung, wobei eine höhere Umgebungstemperatur vorliegt. Dadurch dehnt sich jede Linse 2 stärker aus als die Leiterplatte 4. Dadurch verschieben sich die äußeren Linsen 2 gegenüber dem Sendeelement 6 bzw. gegenüber dem Empfangselement 8, wodurch die bisher parallelen Strahlbündel 14 in ihrer Richtung geändert werden, und jeweils in einem Winkel nach rechts oder links geneigt werden, wodurch die äußeren Strahlbündel 14 nachteilig voneinander weg gerichtet sind. Lediglich das Strahlbündel 14 der mittleren Linse 2 verläuft weiter senkrecht zur Leiterplattenoberfläche 16, da die Linse 2 weiter symmetrisch über dem Sendeelement 6 bzw. Empfangselement 8 angeordnet ist. Im Überlappungsbereich der Optikmodule 3 überschneiden sich die Strahlbündel 14 aufgrund der Ausdehnung durch die höhere Temperatur.

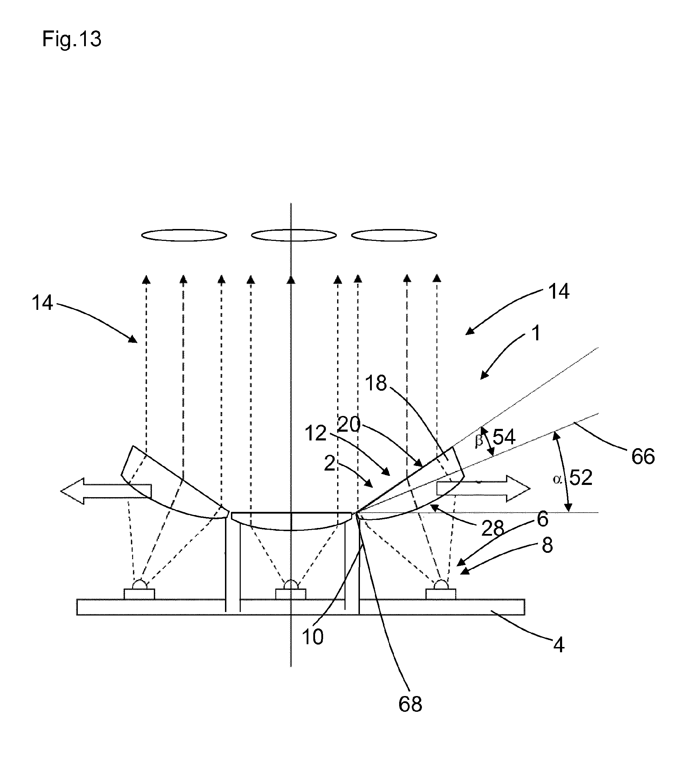

Gemäß Figur 13 sind drei Sammellinsen 12 an zwei Abstandshaltern 10 angeordnet, wobei eine erste Sammellinse 12 an dem ersten Abstandshalter 10 angeordnet ist, eine zweite Sammellinse 12 an dem zweiten Abstandshalter 10 und eine dritte Sammellinse 12 zwischen dem ersten und dem zweiten Abstandshalter 10 angeordnet ist, wobei vor der erste Sammellinse 12 und vor der zweiten zweite Sammellinse 12 jeweils ein Ablenkprisma 18 angeordnet ist.

Gemäß Figur 13 ist ein temperaturinsensitiver Aufbau einer Linsenreihe 42 mit drei Linsen 2 gebildet. Die Linsenreihe 42 ist symmetrisch um eine Symmetrieebene bzw. eine Symmetrieachse aufgebaut. Die Abstandshalter 10, welche die Linsenreihe 42 mit der Leiterplatte 4 verbinden, sind ebenfalls symmetrisch angeordnet. Dadurch dehnt sich bei einer Temperaturänderung sowohl die Linsenreihe 42 als auch die Leiterplatte 4 symmetrisch zur Symmetrieebene aus. Das Zentrum der mittleren Linse 2, bzw. der dritten Linse 2 bleibt damit bei Temperaturänderungen ortsfest über dem mittleren Sendeelement 6 bzw. dem mittleren Empfangselement 8. Diese dritte Sammellinse 12 besitzt daher keine plane Grenzfläche 20 bzw. gewinkelte Planfläche bzw. kein Ablenkprisma 18. Die erste und zweite Linse 2, also die äußeren Linsen 2 entfernen sich bei einer Temperaturerhöhung von der Symmetrieebene bzw. Symmetrieachse 46, entsprechend nähern sich diese an bei einer Temperaturverringerung. Die erste und zweite Linse 2 besitzen eine plane Grenzfläche 20 bzw. gewinkelte Planfläche bzw. weisen ein Ablenkprisma 18 auf. Der spitze Winkel β 54 der planen Grenzfläche 20 bzw. der Planfläche bzw. des Ablenkprismas 18 ist abhängig von der Wellenlänge des verwendeten Lichts und den Abständen von Linse 2 und Sendeelement 6 bzw. Empfangselement 8 zur Symmetrieachse 46 bzw. Symmetrieebene.

Die Linsenreihe 42 ist dabei derart ausgebildet, dass diese sich bei einer Temperaturänderung nur lateral relativ zur Leiterplatte 4 ausdehnt. Die Ausdehnungsdifferenz zwischen Linsenreihe 42 und Leiterplatte 4 wird von den Abstandshaltern 10 aufgefangen. Diese sind elastisch ausgebildet und verbiegen sich bei einer Temperaturänderung.

Gemäß einer nicht dargestellten Ausführungsform sind n Sammellinsen 12 nebeneinander in einer Linsenreihe 42 angeordnet, so dass die optischen Achsen der Sammellinsen parallel beabstandet zueinander sind, wobei n eine natürliche Zahl ist. So sind gemäß dieser Ausführungsform Optikmodule mit einer Vielzahl von Sammellinsen, beispielsweise 10, 20, 30, 40 oder mehr Sammellinsen in einer Reihe vorgesehen. Die spitzen Winkel α und β der jeweiligen Prismen der jeweiligen Sammellinsen sind dabei jeweils individuell ausgebildet und ggf. unterschiedlich.

Gemäß einer nicht dargestellten Ausführungsform sind n mal m Sammellinsen 12 in einer Fläche in einem Linsenarray 40 angeordnet, so dass die optischen Achsen 48 der Sammellinsen 12 parallel beabstandet zueinander sind, wobei n und m natürliche Zahlen sind. So sind gemäß dieser Ausführungsform Optikmodule 1 mit einer Vielzahl von Sammellinsen 12, beispielsweise zehn mal zehn, zwanzig mal zwanzig, dreißig mal dreißig, vierzig mal vierzig oder mehr Sammellinsen 12 in einem Linsenarray 40 vorgesehen. Die spitzen Winkel α und β der jeweiligen planen Grenzfläche 20 bzw. der Ablenkprismen 18 der jeweiligen Sammellinsen 12 sind dabei jeweils individuell ausgebildet und ggf. unterschiedlich.

Gemäß Figuren 4, 8 und 13 ist die Sammellinse 12 und das Ablenkprisma 18 einstückig ausgebildet. Dadurch ist zwischen der Sammellinse 12 und dem Ablenkprisma 18 keine störende Übergangsfläche bzw. Grenzfläche mehr vorhanden, an der es zu unerwünschten Reflexionen kommen kann. Gemäß Figuren 4, 8 und 13 kann die Sammellinse 12 und der Abstandshalter 10 ebenfalls einstückig ausgebildet sein.

Gemäß einer nicht dargestellten Ausführungsform ist zwischen der Sammellinse und der Leiterplattenoberfläche ein Kunststofftubus angeordnet. Der Kunststofftubus ist bevorzugt aus schwarzem Kunststoff ausgebildet und verhindert störende Reflexionen zwischen Sammellinse und Sendeelement bzw. Empfangselement. Der Tubus weist eine matte Oberfläche auf, wodurch das Störlicht besser absorbiert wird.

Gemäß einer nicht dargestellten Ausführungsform ist der optische Sensor eine Lichtschranke oder ein Lichttaster. Bei der Lichtschranke kann es sich um eine Einweglichtschranke mit einem Sender und einem gegenüberliegenden Empfänger handeln. Jedoch kann es sich bei der Lichtschranke auch um eine Reflexionslichtschranke handeln, wobei Sender und Empfänger in einem gemeinsamen Gehäuse untergebracht sind und gegenüberliegend ein Retroreflektor angeordnet ist. Durch das erfindungsgemäße Optikmodul kann die Lichtschranke weniger störanfällig bei Temperaturschwankungen ausgebildet werden. Bei dem Lichttaster kann es sich beispielsweise um einen Lichttaster basierend auf Lichtlaufzeit oder Triangulation handeln.

Gemäß einer nicht dargestellten Ausführungsform ist der optische Sensor ein Lichtgitter. Bei dem Lichtgitter kann es sich um ein Einweglichtgitter mit einem Sender mit einer Vielzahl von Sendeelementen auf einer Seite und einem gegenüberliegenden Empfänger mit einer Vielzahl von Empfangselementen handeln. Jedoch kann es sich bei der Lichtschranke auch um ein Reflexionslichtgitter handeln, wobei Sendeelemente und Empfangselemente in einem gemeinsamen Gehäuse untergebracht sind und gegenüberliegend ein Retroreflektor angeordnet ist. Durch das erfindungsgemäße Optikmodul kann das Lichtgitter weniger störanfällig bei Temperaturschwankungen ausgebildet werden. Auch das Lichtgitter kann nach dem Prinzip eines Lichttasters arbeiten, also z. B. nach dem Prinzip der Lichtlaufzeit oder der Triangulation.

Bezugszeichen:

    1 Optikmodul

2 Linse
3 Optikmodul
4 Leiterplatte
6 Sendeelement
8 Empfangselement
10 Abstandshalter
12 Sammellinse
14 Strahlenbündel
16 Leiterplattenoberfläche
18 Ablenkprisma
20 Grenzfläche
22 erste Grenzfläche
24 zweite Grenzfläche
26 Schnittkante
28 konvexe Fläche
30 plane Fläche
32 erste Sammellinse
34 zweite Sammellinse
36 dritte Sammellinse
40 Linsenarray
42 Linsenreihe
44 Kunststofftubus
46 Symmetrieachse
48 optische Achse
52 spitzer Winkel $\alpha$
54 spitzer Winkel $\beta$
56 erster Abstandshalter
58 zweiter Abstandshalter
60 optische Achsen
62 temperaturabhängiger Schielwinkel $\alpha$
64 Lichtspot
66 Hauptebene
68 Winkelursprung

**Patentansprüche**

1. Optikmodul mit mindestens einer Linse (2), einer Leiterplatte (4) und mindestens einem Sendeelement (6) und/oder mindestens einem Empfangselement (8), welches auf der Leiterplatte (4) angeordnet ist, wobei die Linse (2) und die Leiterplatte (4) mittels eines Abstandshalters (10) beabstandet voneinander angeordnet sind, wobei die Linse (2) an mindestens einer Stelle an dem Abstandshalter (10) angeordnet ist und der Abstandshalter (10) mit der Leiterplatte (4) verbunden ist, wobei die Linse (2) eine Sammellinse (12) ist, um ein Strahlenbündel (14) auf das Empfangselement (8) zu fokussieren und/oder ein Strahlenbündel (14) von dem Sendeelement (6) zu erzeugen,
**dadurch gekennzeichnet, dass**
eine Hauptebene (66) der Sammellinse (12) in einem spitzen Winkel $\alpha$ (52) zu einer Ebene parallel zur Leiterplattenoberfläche (16) angeordnet ist und
die Sammellinse eine plane Grenzfläche (20) aufweist, die in einem spitzen Winkel $\beta$ zur Hauptebene (66) der Sammellinse (12) verläuft, wobei die spitzen Winkel $\alpha$ (52) und $\beta$ (54) einen gemeinsamen Winkelursprung (68) aufweisen.

2. Optikmodul nach Anspruch 1, **dadurch gekennzeichnet, dass** der Winkel $\beta$ (54) gemäß der Formel

$$\beta = \arctan\left\{\cos\alpha\left[\frac{dn}{dT}\left(\frac{d\alpha}{dT}\right)^{-1} + \sin\alpha\right]^{-1}\right\}$$

eine Funktion des Winkels α (52) ist.

3. Optikmodul nach einem der vorhergehenden Ansprüche, **dadurch gekennzeichnet, dass** die Sammellinse (12) und das Ablenkprisma (18) aus Kunststoff sind.

4. Optikmodul nach einem der vorhergehenden Ansprüche, **dadurch gekennzeichnet, dass** die Sammellinse (12) eine konvexe Fläche (28) und eine gegenüberliegende plane Fläche (30) aufweist.

5. Optikmodul nach einem der vorhergehenden Ansprüche, **dadurch gekennzeichnet, dass** zwei Sammellinsen (12, 32, 34) an einem Abstandshalter (10) gegenüberliegend angeordnet sind.

6. Optikmodul nach einem der vorhergehenden Ansprüche, **dadurch gekennzeichnet, dass** drei Sammellinsen (12, 32, 34, 36) an zwei Abstandshaltern (10, 56, 58) angeordnet sind, wobei eine erste Sammellinse (32) an dem ersten Abstandshalter (56) angeordnet ist, eine zweite Sammellinse (34) an dem zweiten Abstandshalter (58) und eine dritte Sammellinse (36) zwischen dem ersten Abstandshalter (56) und dem zweiten Abstandshalter (58) angeordnet ist, wobei die erste Sammellinse (32) und die zweite Sammellinse (34) jeweils eine plane Grenzfläche aufweist, die in einem spitzen Winkel β zur Hauptebene der Sammellinse verläuft, wobei die spitzen Winkel α (52) und β (54) einen gemeinsamen Winkelursprung aufweisen.

7. Optikmodul nach einem der vorhergehenden Ansprüche 1 bis 3, **dadurch gekennzeichnet, dass** n Sammellinsen (12) nebeneinander in einer Linsenreihe (42) angeordnet sind, so dass die optischen Achsen (60) der Sammellinsen (12) parallel beabstandet zueinander sind, wobei n eine natürliche Zahl ist.

8. Optikmodul nach einem der vorhergehenden Ansprüche 1 bis 3, **dadurch gekennzeichnet, dass** n * m Sammellinsen (12) in einer Fläche in einem Linsenarray (40) angeordnet sind, so dass die optischen Achsen (60) der Sammellinsen (12) parallel beabstandet zueinander sind, wobei n und m natürliche Zahlen sind.

9. Optikmodul nach einem der vorhergehenden Ansprüche, **dadurch gekennzeichnet, dass** die Sammellinse (12) und das Ablenkprisma (18) einstückig ausgebildet sind.

10. Optikmodul nach einem der vorhergehenden Ansprüche, **dadurch gekennzeichnet, dass** die Sammellinse und der Abstandshalter einstückig ausgebildet ist.

11. Optikmodul nach einem der vorhergehenden Ansprüche, **dadurch gekennzeichnet, dass** zwischen der Sammellinse (12) und der Leiterplattenoberfläche (16) ein Kunststofftubus (44) angeordnet ist.

12. Optischer Sensor mit einem Optikmodul (1) nach einem der vorhergehenden Ansprüche 1 bis 11.

13. Optischer Sensor nach Anspruch 12, **dadurch gekennzeichnet, dass** der optische Sensor eine Lichtschranke oder ein Lichttaster ist.

14. Optischer Sensor nach Anspruch 12, **dadurch gekennzeichnet, dass** der optische Sensor ein Lichtgitter ist.

Fig.1

Fig.2

14

3

2

6

8

4

Fig.3

Fig.4

Fig.5

Fig.6

Fig.7

Fig.8

Fig.9

Fig.10

Fig.11

Fig.12

Fig.13

Fig.14

20

20

T < T$_0$

**T = T$_0$**

T > T$_0$

18

26

**Europäisches Patentamt**
**European Patent Office**
**Office européen des brevets**

# EUROPÄISCHER RECHERCHENBERICHT

Nummer der Anmeldung

EP 14 19 6128

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | EP 0 280 366 A1 (PHILIPS NV [NL]) 31. August 1988 (1988-08-31) * Seite 6, Zeile 26 - Seite 8, Zeile 38; Abbildungen 2-3 * * Seite 2, Zeile 54 - Seite 3, Zeile 6 * ----- | 1,3,4 | INV. G02B7/02 |
| A | EP 1 742 168 A1 (SICK AG [DE]) 10. Januar 2007 (2007-01-10) * Absatz [0027]; Abbildung 3 * * Absatz [0028] - Absatz [0029]; Abbildungen 4, 5A-B * ----- | 1,3,4,7, 9,12 | |
| A | US 2004/136100 A1 (TORII TOMONARI [JP]) 15. Juli 2004 (2004-07-15) * Absatz [0055] - Absatz [0057]; Abbildungen 1-2 * * Absatz [0069] * * Absatz [0073] - Absatz [0078]; Abbildungen 7-8 * ----- | 1,3,12 | |

RECHERCHIERTE SACHGEBIETE (IPC)

G02B
G01V

Der vorliegende Recherchenbericht wurde für alle Patentansprüche erstellt

| Recherchenort | Abschlußdatum der Recherche | Prüfer |
|---|---|---|
| Berlin | 8. Mai 2015 | A. Jacobs |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 14 19 6128

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-05-2015

| Im Recherchenbericht angeführtes Patentdokument | Datum der Veröffentlichung | Mitglied(er) der Patentfamilie | Datum der Veröffentlichung |
|---|---|---|---|
| EP 0280366 A1 | 31-08-1988 | EP 0280366 A1<br>JP S63240512 A<br>NL 8700440 A<br>US 4855987 A | 31-08-1988<br>06-10-1988<br>16-09-1988<br>08-08-1989 |
| EP 1742168 A1 | 10-01-2007 | DE 102005031710 A1<br>EP 1742168 A1<br>US 2007007439 A1 | 11-01-2007<br>10-01-2007<br>11-01-2007 |
| US 2004136100 A1 | 15-07-2004 | JP 4185397 B2<br>JP 2004251874 A<br>US 2004136100 A1 | 26-11-2008<br>09-09-2004<br>15-07-2004 |

EPO FORM P0461

Für nähere Einzelheiten zu diesem Anhang : siehe Amtsblatt des Europäischen Patentamts, Nr.12/82